# EUROPÄISCHE PATENTSCHRIFT

(11) **EP 1 039 126 B1**
(45) Veröffentlichungstag und Bekanntmachung des Hinweises auf die Patenterteilung: **07.07.2004**
(21) Anmeldenummer: 99810260.2
(22) Anmeldetag: 23.03.1999
(51) Int. Cl.: F03B 15/14

(54) **Verfahren zum Steuern von Lastmanövern in einer Wasserkraftanlage mit Wasserschloss**
Control method for a hydroelectric installation with surge tank during load changes
Procédé de réglage d'une centrale hydroélectrique avec réservoir d'expansion pendant des changements de charge

(43) Veröffentlichungstag der Anmeldung: 27.09.2000
(73) Patentinhaber: VA TECH HYDRO GmbH & Co., 1140 Wien (AT)
(72) Erfinder: Dörfler, Peter Karl, Dr., 8057 Zürich (CH)
(74) Vertreter: VA TECH Patente GmbH & Co

(56) Entgegenhaltungen:
- EP-A- 0 864 747
- A.H. GLATTFELDER & F JEANNERET: "Zur begrenzung von Wasserschlosstransienten in hydraulische Anlagen" ESCHER WYSS MITEILUNGEN, Bd. 53, Nr. 1/2, 1980, Seiten 193-199, XP002112977 Zürich
- PROF.DR.-ING. J.RAABE: "Hydraulische Maschinen und Anlagen" 4. Oktober 1993 (1993-10-04) , VDI-VERLAG GMBH , DÜSSELDORF XP002112978 200880 * Seite 295 - Seite 300 * * Seite 297, Zeile 15 - Zeile 17 *

## Beschreibung

Die Erfindung betrifft ein Verfahren zum Steuern von Lastmanövern in einer Wasserkraftanlage mit einem hochdruckseitigen und/oder niederdruckseitigen Wasserschloss.

Ein solches Verfahren ist beispielsweise aus der EP-A-0 864 747 bekannt.

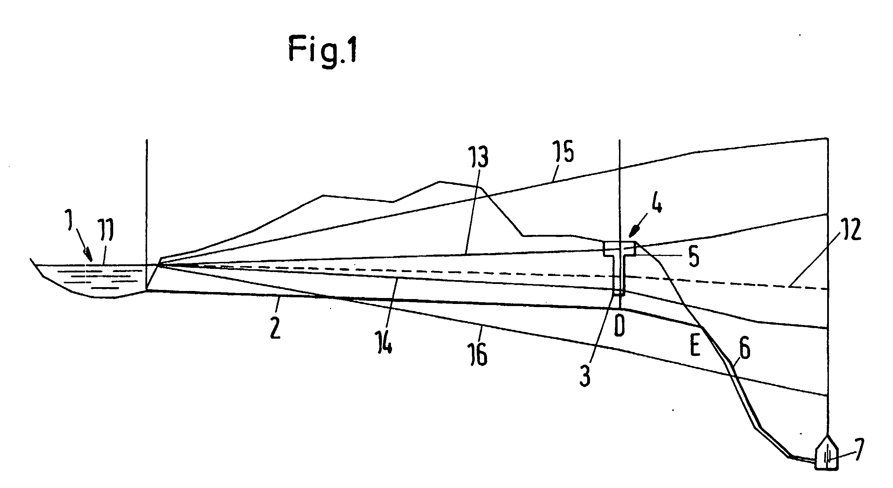

Die Fig.1 zeigt eine Wasserkraftanlage die im Wesentlichen einen Stausee 1, einen unterirdischen Stollen 2, ein Wasserschloss 3 mit einem Abschnitt 4, der einen grösserem Querschnitt mit der Bodenfläche 5 hat, eine teilweise frei liegende Leitung 6 und ein Krafthaus 7 umfasst. Aus topographischen Gründen ist es häufig erforderlich, dass das Wasser über lange Strecken dem Krafthaus 7 zugeführt werden muss. Das Wasser wird vom Stausee 1 durch den unter Druck stehenden Stollen 2 und dann durch die Leitung 6 dem Krafthaus 7 zugeführt. Im stationären Zustand stellt sich am Stausee ein Pegel 11 ein, der als Oberwasserpegel bezeichnet wird. Bei Nennlast und stationärer Strömung sinkt der Druck infolge von Reibungsverlusten längs der Wasser führenden Leitungen gemäss der Linie 12. Bei Lastmanövern können sowohl tiefere als auch höhere Drücke auftreten. Die obere und untere Einhüllende 13 und 14 der möglichen Druckverläufe sind als extreme Drucklinien eingetragen. Bei einer Anlage ohne Wasserschloss ergeben sich die extremen Drucklinien 15 und 16.

Werden bei einer solchen Anlage die in Betrieb stehenden Turbinen abgeschaltet, so muss die in der gesamten Zuleitung fliessende Wassermenge abgebremst werden. Dabei tritt im Triebwasserweg eine vorübergehende Druckerhöhung (Druckstoss) auf.

Andererseits führt die Beschleunigung der Wassermassen beim Anfahren oder bei Lasterhöhung der Turbinen zur Absenkung des Drucks in der Zuleitung. Dabei darf in keinem Teil der Leitung ein Vakuum auftreten. In der Figur 1 wäre dies z.B. im Bereich der Punkte D und E der Fall, weil die niedrigsten auftretenden Energiehöhen, welche durch die Linie 16 gekennzeichnet sind wesentlich unter der geodätischen Höhe der Wasser führenden Leitung liegen.

Die grossen Druckänderungen im Triebwasserweg sind schwierig zu beherrschen und behindern zudem die Regelung der Turbinen wesentlich. Diese Probleme werden weitgehend gelöst, wenn das Wasserschloss 3 möglichst nahe bei dem Krafthaus gebaut wird. Das Wasserschloss erfüllt im wesentlichen folgende Aufgaben:
1. Schutz des Stollens vor Druckstössen, die aus den Stellbewegungen der Turbinen resultieren.
2. Verminderung des Druckstosses in der Druckleitung.
3. Verbesserung der Turbinenregelung.
4. Wasserspeicher bei Lastaufnahme der Turbinen.

Es ist auch möglich ein Wasserschloss im Niederdruckteil der Anlage vorzusehen, wenn ein langer Ablaufstollen vorhanden ist. Solche Wasserschlösser verhalten sich gewissermassen spiegelbildlich zu denen im Hochdruckteil. Beim Anfahren wird der Druckanstieg und bei der Abschaltung die Unterdruckbildung vermindert.

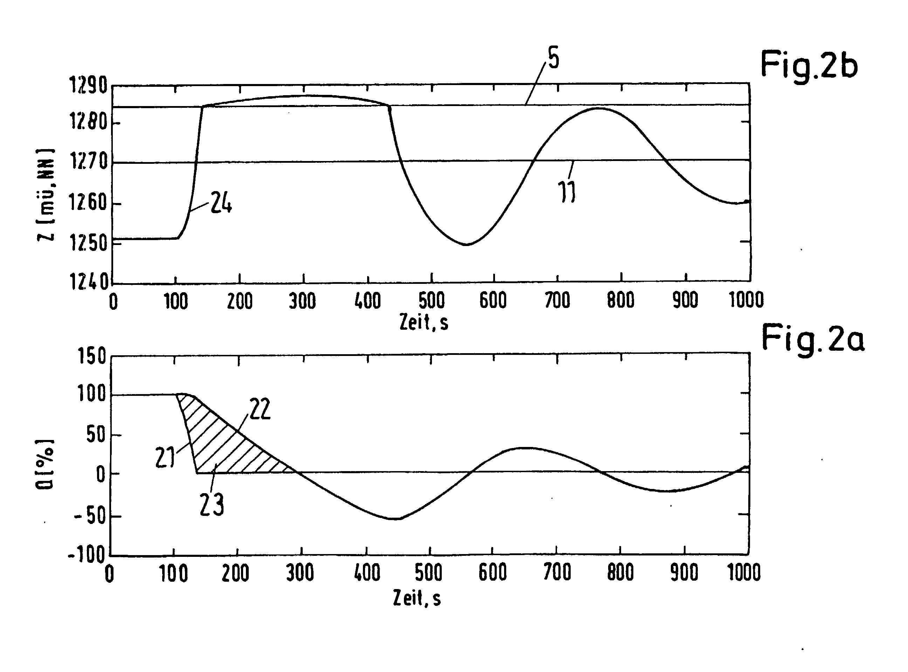

Im Betrieb muss das Wasserschloss mindestens die bei Abschaltung aller Turbinen aus der Vollast anfallende Wassermenge aufnehmen, ohne dass es überläuft. In den Figuren 2a und 2b sind die Vorgänge bei einer derartigen Abschaltung dargestellt.

Es wird auf die Figuren 2a und 2b Bezug genommen. In der Fig. 2a zeigt die Kurve 21 den Durchfluss durch die Turbinen, der beginnend mit Zeitpunkt 100 s infolge Abschaltung auf Null reduziert wird. Der Durchfluss im Druckstollen 2 wird verzögert abgebremst. Die Kurve 22 zeigt den Verlauf des Durchflusses im Druckstollen 2 nach der Abschaltung der Turbinen. Die Differenz 23 der beiden Durchflussmengen strömt in das Wasserschloss 3 und füllt dieses auf, wie dies die Kurve 24 der Fig.2b zeigt. Die Druckdifferenz zwischen dem Wasserschlosspegel 24 und dem Oberwasserpegel 11 ermöglicht die Verzögerung der Strömung im Druckstollen 2. Im dargestellten Fall wird das Aufschwingen des Pegels im Wasserschloss 3 durch den Anschnitt 4 oberhalb 1284 m vermindert, um das Überlaufen zu vermeiden.

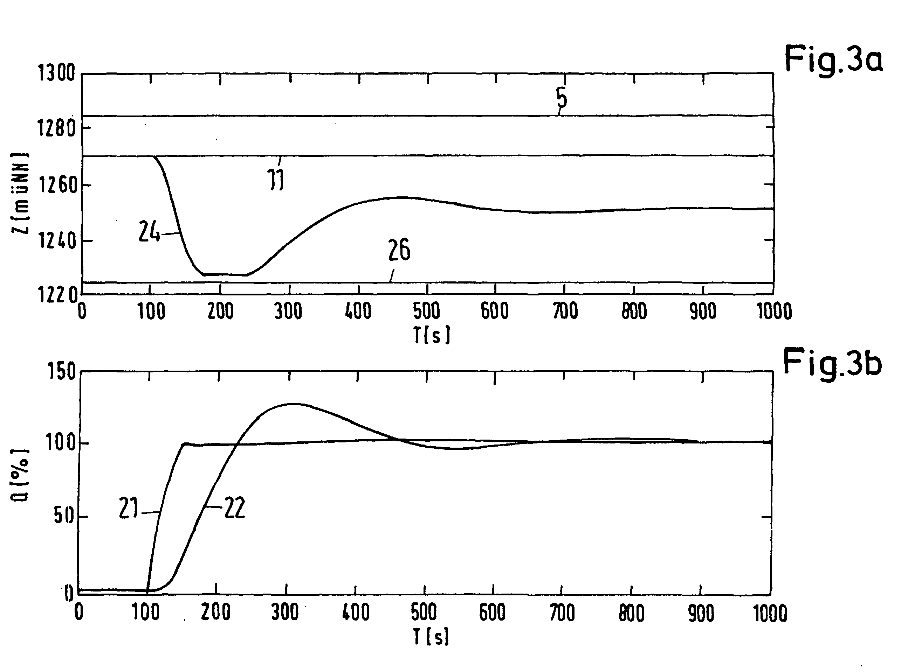

Im Falle einer Steigerung des Durchflusses durch die Turbinen, z.B. von Leerlauf auf Vollast, laufen ähnliche Vorgänge wie in den Figuren 2a und 2b ab, jedoch mit umgekehrtem Vorzeichen. Ein Beispiel zeigen die Figuren 3a und 3b. In diesem Beispiel wird die untere Begrenzung des Wasserschlossschachts (Linie 26) nicht erreicht.

Ein Wasserschloss sollte bei gleichzeitiger Belastung aller Turbinen nicht leerlaufen. Dies ist keineswegs in allen Anlagen erfüllbar.

Das vorstehend erwähnte Überlaufen bzw. Leerlaufen des Wasserschlosses basiert auf Laständerungen, die aus einem stationären Betriebszustand des hydraulischen Systems heraus ergeben. Zieht man mehr als nur einen Lastwechsel in Betracht, so können die Ausgangsbedingungen eines Manövers wesentlich ungünstiger sein und die Erfüllung der Sicherheitsanforderungen wird erheblich erschwert.

Jedes Wasserschloss 3 bildet zusammen mit dem Druckstollen 2, welcher geschützt werden soll, ein schwingfähiges System. So erkennt man in Fig. 2b, dass zur Zeit 280 s der Wasserstand im Wasserschloss 3 einen maximalen Wert erreicht, bei gleichzeitigem Stillstand der Wassermassen im Druckstollen. Die Druckdifferenz zwischen Wasserschlosspegel und Oberwasserpegel wirkt weiter und bewirkt eine Umkehrung der Strömung im Druckstollen 2 und die Leerung des Wasserschlosses 3 solange, bis auch die umgekehrte Strömung wieder zum Stillstand gekommen ist, und so weiter.

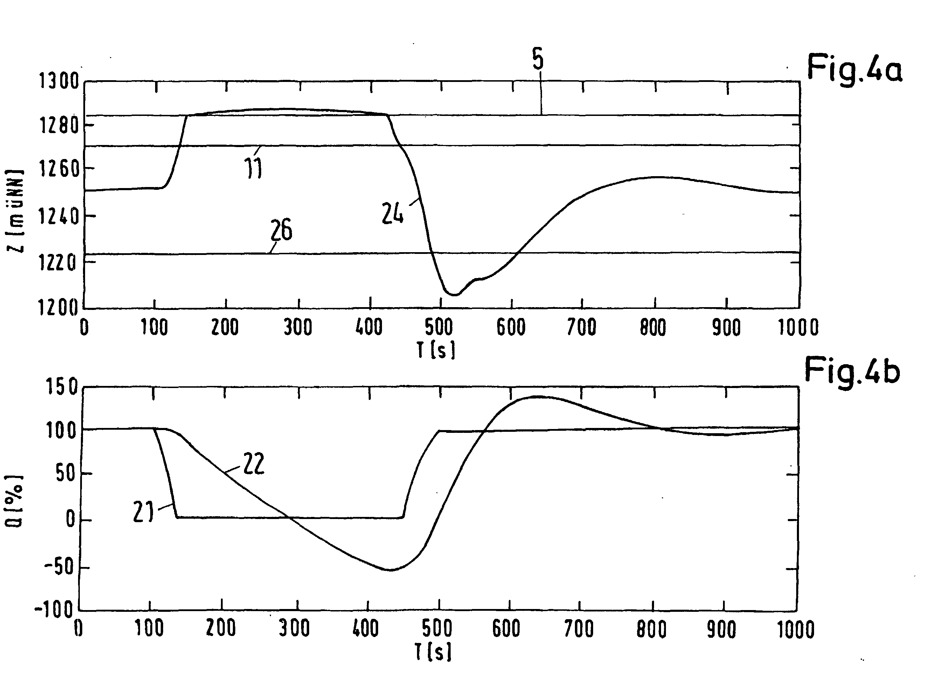

In diesem schwingungsfähigen System wirken also die Laständerungen, d.h. die Änderungen des Volumenstroms Q der Turbinen als Störungen, welche zu Schwingungen des Pegels im Wasserschloss führen. Die Schwingungen können durch ungünstige zeitliche Abfolge von Laständerungen weiter angefacht werden. In der Folge kann das Wasserschloss trotz korrekter Bemessung leer- oder überlaufen. Die Figuren 4a und 4b zeigen ein Beispiel. In diesem Fall sollen nach einem zum Zeitpunkt 100 s ausgelösten Lastabwurf die Turbinen bei 450 s wieder voll belastet werden. In diesem Fall würde der Pegel im Wasserschloss bis 1206 m üNN absinken und dabei die Untergrenze 26 des Wasserschlosses um 20 m unterschreiten. Dies bedeutet, dass das Wasserschloss völlig entleert wird und eine grosse Luftmenge in den Triebwasserweg eindringt, was nicht zugelassen werden kann.

Aus der bisherigen Technik sind eine Anzahl von Massnahmen zur Vermeidung dieses Problems bekannt:
- Ein Wasserschloss mit ausreichendem Bauvolumen vorsehen. Im Extremfall kann man Anlagen bauen, die jeder beliebigen Lastsequenz gewachsen sind. Durch Anwendung besonderer Bauarten von Wasserschlössern, z.B. gedrosseltes Wasserschloss, Kammerwasserschloss oder Differentialwasserschloss lässt sich das Bauvolumen etwas reduzieren. Dieser Lösungsweg ist durch hohe Baukosten gekennzeichnet;
- Beschränkung des Regulierhubs der Turbinen je nach Anzahl Turbinen in Betrieb;
- ausreichend langsame Lastwechsel, d.h. Stellzeiten in der Grössenordnung der Schwingungsperiode des Pegels im Wasserschlosses, z.B. einige Minuten. Diese Lösung ist im allgemeinen für Regelkraftwerke nicht geeignet;
- Einhaltung von Wartezeiten, z.B. zwischen Lastabwurf und neuerlicher Belastung der Turbinen, oder zwischen Anfahren der ersten, zweiten, dritten Turbine und weiterer Turbinen. In diesem Fall ergeben sich ebenfalls Wartezeiten in ähnlicher Grössenordnung, um die Schwingung im Wasserschloss abklingen zu lassen. Dieses starre Schema erweist sich als Nachteil, weil in manchen Fällen Wartezeiten eingehalten werden, obwohl kein Risiko für ein Lastmanöver besteht;
- Berücksichtigung der Schwingungsphase. Eine Belastung wird nur in gewissen Phasen der Schwingung im Wasserschloss zugelassen. Nachteilig ist, dass dieses Verfahren die dynamischen Möglichkeiten der Anlage nicht voll ausnützt;
- Berücksichtigung des zeitlichen Gradienten des Pegels im Wasserschloss. Überschreitet dieser einen bestimmten Grenzwert, so wird die Öffnung der Regulierorgane der Turbinen blockiert. Auch bei diesem Verfahren werden die dynamischen Möglichkeiten nicht voll ausgenützt;
- Online-Vorausberechnung von worst case -Szenarien in einem Steuerrechner und entsprechende Begrenzung des Lastsollwertes. Nachteilig ist der sehr grosse Aufwand;

Der Erfindung liegt die Aufgabe zugrunde, ein Verfahren der eingangs genannten Art zu verbessern.

Diese Aufgabe wird erfindungsgemäss mit den Merkmalen des Anspruches 1 gelöst.

Der Vorteil der Erfindung ist darin zu sehen, dass sie bei grossen Laständerungen das Regelpotential der Anlage so weit wie irgend möglich ausschöpft, indem der zulässige Wasserschlosspegel in der kürzest möglichen Zeit erreicht wird, dadurch wird auch die gewünschte Laständerung in der kürzest möglichen Zeit realisiert.

Nachfolgend wird die Erfindung anhand der beiliegenden Zeichnungen erläutert.

Es zeigen:
- Fig.1: Eine schematische Darstellung einer Wasserkraftanlage;
- Fig.2a: ein Diagramm des Durchflusses bei Turbinenlastabwurf in einer Anlage mit hochdruckseitigem Wasserschloss;
- Fig.2b: ein Diagramm des Pegels im hochdruckseitigen Wasserschloss bei einen Turbinenlastabwurf gemäss Fig.2a;
- Fig.3a: ein Diagramm des Durchflusses bei Turbinenlastaufnahme in einer Anlage mit hochdruckseitigem Wasserschloss;
- Fig.3b: ein Diagramm des Pegels im hochdruckseitigen Wasserschloss bei einen Turbinenlastaufnahme gemäss Fig.3a;
- Fig.4a: ein Diagramm des Durchflusses bei einer Lastaufnahme nach Lastabwurf in einer Anlage mit hochdruckseitigem Wasserschloss;
- Fig.4b: ein Diagramm des Pegels im hochdruckseitigen Wasserschloss bei einer Lastaufnahme nach Lastabwurf gemäss Fig.4a;
- Fig.5a-5d: Diagramme der mit dem erfindungsgemässen Verfahren aufgabengemäss erreichten Verbesserung bei einer Anlage mit hochdruckseitigem Wasserschloss;
- Fig.6: ein Diagramm der Lastabhängigkeit der Grenzkurven;
- Fig.7: ein Diagramm einer Anzahl von Grenzkurven für unterschiedliche Last zur Aufrechterhaltung eines Maximalpegels und
- Fig.8a-8d: Diagramme der mit dem erfindungsgemässen Verfahren aufgabengemäss erreichten Verbesserung bei einer Anlage mit niederdruckseitigem Wasserschloss.

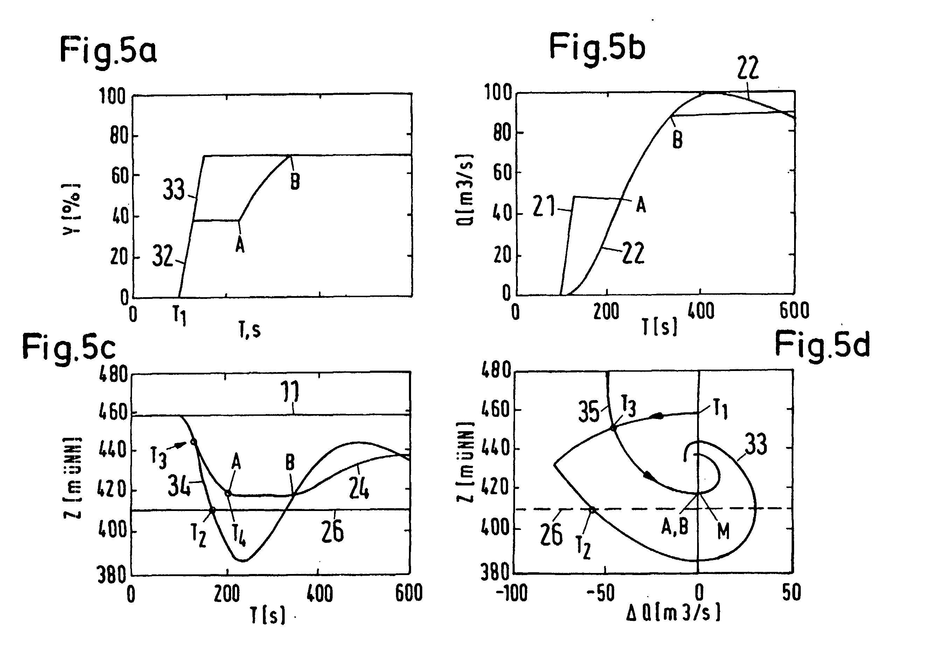

Es wird auf die Figuren 5a bis 5c Bezug genommen, welche Diagramme der Belastung einer Anlage mit hochdruckseitigem Wasserschloss ausgehend von einem stationären Zustand darstellen. In der Figur 5a wird der Verlauf der Öffnung Y des Regulierorgans der Turbine über der Zeit angegeben. Zum Zeitpunkt T₁ wird ein Sollwert der Turbinenlast entsprechend 70 % Öffnung gefordert. Die Kurve 32 zeigt den Verlauf der Turbinenlast, die entsprechend der Öffnungszeit der Turbinen rampenförmig ansteigt. Wird die Turbinenlast (Kurve 33) ohne Rücksicht auf den Pegelverlauf (Kurve 34) bis zum Sollwert erhöht, so wird der zulässige Minimalpegel 26 im Wasserschloss ab dem Zeitpunkt T₂ unterschritten (Fig.5c). Zum Zeitpunkt T₃ muss das Lastmanöver unterbrochen werden, um zum Zeitpunkt T₄ den minimalen Pegel im Wasserschloss in etwa zu erreichen, aber nicht zu unterschreiten (Kurve 24).

Die Grundidee des Verfahrens besteht in der Definition eines Kriteriums für die Verzögerung bzw. Unterbrechung des Lastmanövers. Dieses Kriterium wird in einer besonderen Darstellungsform des Zustandes eines schwingenden Systems, der Phasenebene (Fig.5d) geprüft. In der Phasenebene wird der Verlauf einer Zustandsänderung des schwingenden Systems zweidimensional dargestellt. Die Koordinaten dieser Darstellung sind der Pegel z im Wasserschloss, der gemessen wird und der Nettozufluss ΔQ zum Wasserschloss, der aus der Ableitung des Pegels nach der Zeit (dz/dt) gewonnen wird. In der Phasenebene gibt es besondere Kurven, die das Verhalten des ungestörten Systems bei festgehaltener Last beschreiben. Diese Kurven lassen sich durch numerische Simulation des Systems direkt konstruieren. Diejenige Kurve in Fig.5d, die durch den Punkt M mit der angestrebten Minimalkote verläuft, ist die Grenzkurve 35.

Der aus dem Pegel gebildete Vektor in der Phasenebene Fig.5d wird in kurzen Zeitabständen mit der Grenzkurve verglichen. Sobald die Grenzkurve erreicht ist, wird die Turbinenlast auf dem aktuellen Wert, z.B. 37,5 % Öffnung begrenzt (Fig.5a). Eine Entlastung bleibt jedoch möglich. Aus den Figuren 5c bis 5d ist ersichtlich, dass das so begrenzte Lastmanöver die Forderung des Minimalpegels erfüllt. Eine Sicherheitsmarge ist zweckmässig und unter Berücksichtigung der Genauigkeit der verfügbaren Daten festzulegen. Die Begrenzungsfunktion ist nur auf der linken Seite der Phasenebene wirksam, also bei sinkendem Pegel im Wasserschloss. Es ist auf Fig.5c zu erkennen, dass nach Erreichen der Kote der Pegel über einen längeren Zeitintervall annähernd konstant bleibt. Dies erklärt sich dadurch, dass beim Vorzeichenwechsel von ΔQ ein Lastmanöver zugelassen und eine kleine Erhöhung der Last erlaubt wird, bis die Ableitung des Pegels wieder negativ wird, worauf das Lastmanöver unterdrückt wird. Dieser Zeitabschnitt mit annähernd konstantem Pegel ist in der Phasenebene im Punkt M konzentriert. Im zeitlichen Verlauf der Durchflüsse (Figur 5b) ist es der Abschnitt A,B, in welchem die beiden Durchflusswerte von Stollen (22) und Turbinen (21) übereinstimmen, der Nettozufluss des Wasserschlosses ΔQ also Null ist.

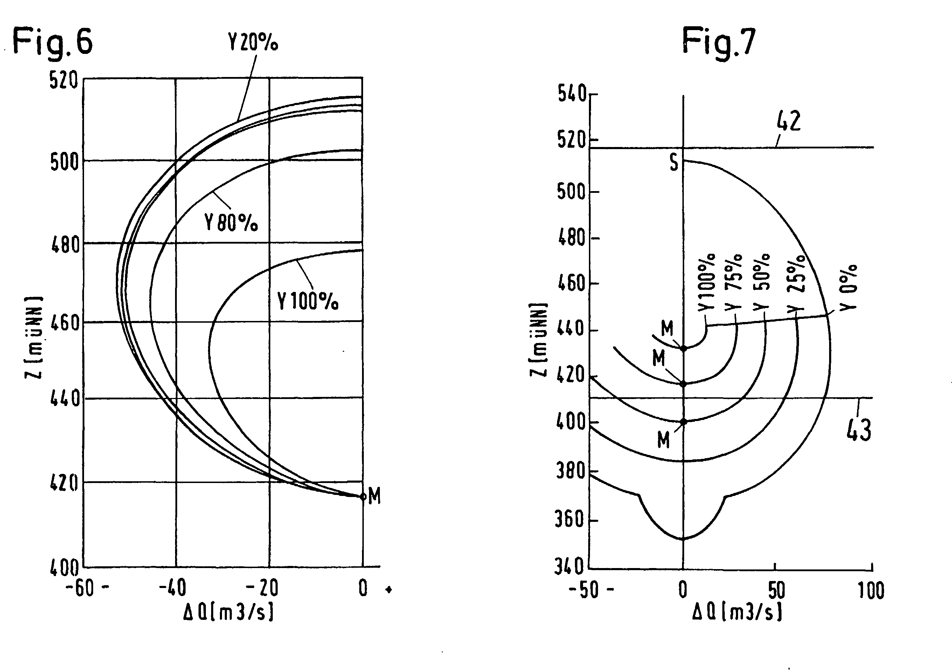

Die Grenzkurve kann ihre Lage in Abhängigkeit von verschiedenen Einflüssen ändern. Wichtigste Einflüsse sind der oberwasserseitige Pegel im Einlauf zum Stollen, und die momentane Belastung der Anlage, dargestellt durch die Öffnungen der Turbinen. In Fig.6 sind die Grenzkurven unter der Annahme gleichen Oberwasserpegels für fünf Öffnungswerte im Abstand von je 20 % dargestellt. Der untere Scheitel ist durch den gewählten Minimumpunkt (M in Fig. 5d) gegeben, während sich der obere Scheitel infolge des reibungsbedingten Druckverlustes im Druckstollen mit zunehmender Last nach tieferen Pegelwerten verschiebt.

Neben dem Leerlaufen des Wasserschlosses besteht bei Lastmanövem das Risiko, dass das Wasserschloss überläuft. Dies kann infolge von Lastabwürfen auftreten. Um das zu verhindern ist für jede Last eine Grenzkurve vor Lastabwurf zu ermitteln. Wie die Fig.7 zeigt, bedient man sich hierzu wieder der Darstellung in der Phasenebene, wobei die Linie 42 den Pegel darstellt, wenn das Wasserschloss überläuft und die Linie 43 den Pegel darstellt, wenn das Wasserschloss leer läuft. Während des Betriebes kann im ungünstigsten Fall der Lastabwurf mitten im Aufschwingen des Wasserschlosses erfolgen, wobei die durch den Punkt S verlaufende Grenzkurve erreicht wird. Durch diese Definition wird ein Minimalpunkt M für jede Turbinenlast erhalten, welcher die Einhaltung des Maximalpegels S zu gewährleisten vermag. Für jeden Minimalwert ist eine Grenzkurve für das Abschwingen des Wasserschlosses bestimmbar. Wie im Fall des Leerlaufens, beeinflusst der Oberwasserspiegel auch beim Überlaufen die Grenzkurve.

Bestehen in einer Anlage beide Risikoarten, so werden beide Kriterien fortlaufend überprüft, wobei jedes Kriterium unabhängig vom anderen zur Blockierung der Turbinenlast führt.

Wie bereits erwähnt kann eine Wasserkraftanlage auf der Niederdruckseite ein Wasserschloss aufweisen. Bei derartigen Anlagen besteht die Gefahr, dass bei Belastung der Turbinen das Wasserschloss überläuft. Um das zu verhindern, kann das Verfahren angewendet werden, wie es bei hochdruckseitigen Wasserschlössern gegen das Leerlaufen vorgesehen ist.

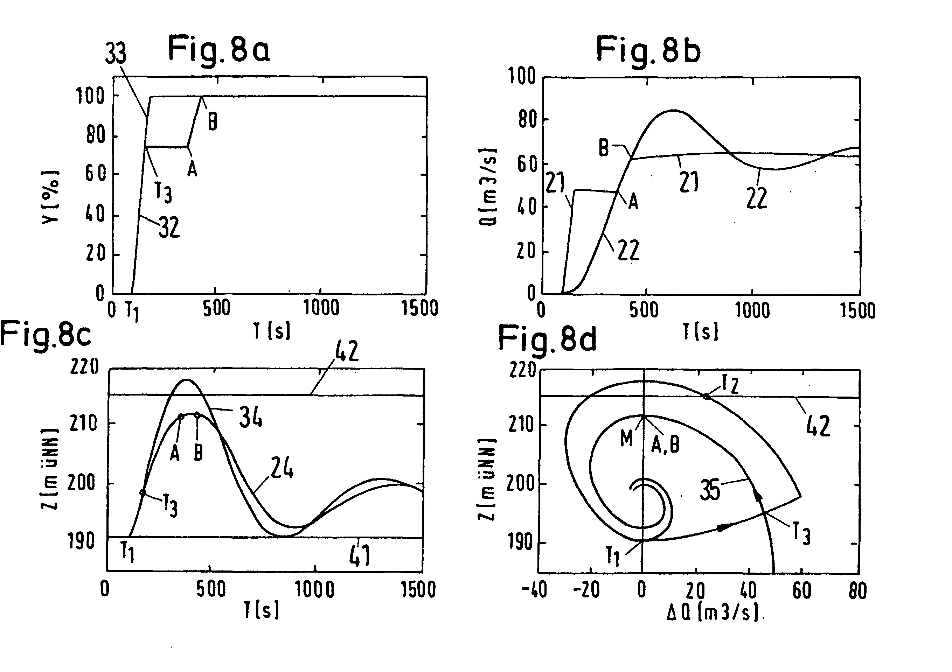

In sinngemäss gleicher Weise wie bei dem in Zusammenhang mit den Figuren 5a bis 5d beschriebenen Verfahren, wird der Zustand in der Phasenebene mit einer Grenzkurve oder, wenn erforderlich, einer Schar von Grenzkurven verglichen, hier jedoch im Falle des positiven Gradienten, d.h. in der aufschwingenden Phase. Dies ist in den Figuren 8a bis 8d dargestellt. Wird die Grenzkurve 35 erreicht, so erfolgt Blockierung der Öffnung aller Stellorgane. In der Fig.8c treten die Pegeländerungen gegenüber der Fig.5c mit umgekehrtem Vorzeichen auf und die Fig.8d ist gegenüber der Fig.5d um 180 Grad gedreht, weil beide Achsen gespiegelt werden. An die Stelle des Oberwasserpegels tritt der Unterwasserpegel 41, an die Stelle des Minimalpegels der Maximalpegel 42.

Bei niederdruckseitigem Wasserschloss entsteht das Risiko gegen Leerlaufen beim Lastabwurf. Dieses kann in Analogie zum hochdruckseitigen Wasserschloss aufgehoben werden. Es muss gewährleistet sein, dass am Beginn des Abschwingvorgangs ein bestimmter Maximalpegel 42 nicht überschritten wird, welcher wiederum lastabhängig ist. Dies wird durch Anwendung von lastabhängigen Grenzkurven beim Abschwingen erreicht.

Bei einer Anlage mit Wasserschlössern auf beiden Seiten des Krafthauses ist es möglich, Risiken auf beiden Seiten abzusichern. Die Kriterien zur Blockierung der Turbinenöffnung werden im Sinne einer "oder"- Verknüpfung zusammengeführt, d. h. jedes Kriterium für sich führt zur Blockierung.

Es kann notwendig oder sogar vorteilhaft sein, den Berechnungsaufwand in der Begrenzungseinrichtung einzuschränken. Dies ist möglich, indem man beim Einsatz der Grenzkurve auf die rechnerische Berücksichtigung einzelner Einflüsse verzichtet. In solchen Fällen hat die Grenzkurve den Charakter einer Näherung. Die numerische Definition der Grenzkurve muss diesem Umstand Rechnung tragen und eine vergrösserte Sicherheitsmarge enthalten. Dafür bleibt die Einfachheit des Verfahrens erhalten.

Diese Vereinfachung kann sinnvoll angewendet werden, wenn
- gewisse Parameter in der Begrenzungseinrichtung nicht als Messwerte verfügbar sind, z.B. der Oberwasserpegel oder die Gesamtlast der Anlage,
- das schwingende System komplex ist. Mit höherer Ordnung des Systems, z.B. bei Vorliegen eines Differentialwasserschlosses, müsste statt einer Grenzkurve eine Grenzfläche benutzt werden,
- die Begrenzung bei vorgegebener, begrenzter Rechenleistung der Ausrüstung realisiert werden soll.

Wie aus Figur 6 ersichtlich ist, variiert die Form der Grenzkurve beträchtlich mit der Last. Dies ist im wesentlichen eine Folge des statischen Druckabfalls im Stollen. Meist arbeiten an einem Stollen und Wasserschloss mehrere Turbinen. Der Lasteinfluss kann nur dann korrekt dargestellt werden, wenn in einer Einrichtung eine Information über den gesamten Durchfluss vorhanden ist. Die Messsignale für den Durchfluss sind in vielen Fällen zu stark verzögert oder haben eine mangelhafte Auflösung. Es ist daher von Vorteil die Durchflusswerte zu berechnen. Die Berechnung kann entweder in der Einrichtung selbst, in den Turbinenreglern oder anderen Einrichtungen auf Grund anderer Messsignale, z.B. Öffnung, Druck, Drehzahl gebildet werden.

Zur Summenbildung aus den einzelnen Durchflüssen wird mit Vorteil eine gegenüber der Gruppenleitebene übergeordnete Einrichtung angewendet.

Sowohl der aktuelle Wert des Pegels im Reservoir, als auch der zeitliche Verlauf des Pegels im Wasserschloss kann mit Hilfe eines Beobachters bereitgestellt werden. Der Beobachter ist eine Funktion im Bereich der Begrenzungseinrichtung. Er enthält ein vereinfachtes dynamisches Berechnungsmodell der wichtigsten Anlagenteile und berechnet fortlaufend aus dem Durchfluss der Turbinen die Änderungen des Rohrbahndrucks und des Pegels im Wasserschloss. Diese werden mit den gemessenen Werten verglichen und der Beobachter führt auf Grund der Differenzen eine Korrektur, (z.B. Wert des Wasserstandes) aus, so dass die Abweichungen vermindert werden.

Jede Grenzkurve ist ursprünglich als Trajektorie oder Phasenporträt eines Schwingungsvorganges um den stationären Wasserschlosspegel definiert, der vom Pegel des am Stollen angrenzenden Reservoirs abhängt. Da sich dieser Wasserstand im Lauf der Zeit verändert, verschieben sich die Grenzkurven in Abhängigkeit vom Pegelstand des Reservoirs. Der Wert des Pegels muss, um diesen Einfluss berücksichtigen zu können, als Information in der Begrenzungseinrichtung verfügbar sein.

In Anlagen mit mehreren Turbinen, die am gleichen Stollen arbeiten, ist es vorteilhaft, die Begrenzungsfunktion nicht im Turbinenregler, sondern in einer übergeordneten Einrichtung, z.B. einem Werkregler, Kraftwerksrechner oder Joint Control vorzusehen. Dies hat den Vorteil, dass bei den Reglern auf Maschinenebene eine vereinfachte Reglerstruktur angewendet werden kann und eine unnötig hohe Anzahl von Signaleingängen vermieden wird.

Die Blockierfunktion lässt sich in manchen Anwendungen qualitativ verbessern. Dazu sind namentlich zwei Möglichkeiten wahlweise vorgesehen:
- Um das Ansprechen in mehreren Etappen (abgesetzes Öffnen) zu vermeiden, werden zwei parallel verlaufende Grenzkurven angewendet, die das Ein- und Ausschalten der Blockierfunktion im Sinne einer Hysterese steuern. An der äusseren Grenzkurve wird die Blockierung wirksam, an der inneren wird sie wieder aufgehoben.
- Bei Anwendungen mit grob angenäherter Grenzkurve ist es vorteilhaft, zwei Grenzkurven in grösserem Abstand zu verwenden, durch die Blockierfunktion nicht ein- und ausgeschaltet, sondern die erlaubte Geschwindigkeit der Lasterhöhung stetig zwischen Null und dem zulässigen Maximalwert verändert wird. An der äusseren Grenzkurve wird die zulässige Belastungsgeschwindigkeit Null (also die Blockierung ist erreicht), an der inneren erreicht sie einen Höchstwert, der der kürzesten vorgesehenen Öffnungszeit des Stellorgans entspricht.

Die Ausfallsicherheit der Begrenzungseinrichtung erfordert die Überwachung der Eingangssignale. Bei Ausfall eines Signals ist die Begrenzungsfunktion nicht mehr durch die Grenzkurven gewährleistet. Die Begrenzungsfunktion wird in diesem Fall automatisch in den Gradientenbegrenzer verlagert, welcher der Positionierregelung des Stellorgans jeder Turbine vorgeschaltet ist. Die maximal erlaubte Öffnungsgeschwindigkeit, die in diesem Element bestimmt wird, wird bei Ausfall der Begrenzungseinrichtung auf einen Wert vermindert, welcher niedrig genug ist, um kritische Pegelbewegungen im Wasserschloss bei beliebigen Lastmanövern zu vermeiden.

## Patentansprüche

1. Verfahren zum Steuern von Lastmanövern in einer Wasserkraftanlage mit einem hochdruckseitigen und/oder niederdruckseitigen Wasserschloss, **dadurch gekennzeichnet, dass** ein Pegel im Wasserschloss bestimmt wird, dass anhand des zeitlichen Verlaufs dieses Pegels die Zustandsgrössen Ist-Pegel (z) und Nettozufluss (ΔQ) für das Wasserschloss bestimmt und in einer Phasenebene mit einer Grenzkurve verglichen werden, welche dem Zustandsverlauf bei festgehaltener Last entspricht und annähernd durch den Punkt des maximal oder minimal zulässigen Pegels verläuft, und dass bei Erreichen der Grenzkurve die Lasterhöhung unterbrochen wird.

2. Verfahren nach Anspruch 1, **dadurch gekennzeichnet, dass** der Ist-/Zustand in Zeitintervallen überwacht wird.

3. Verfahren nach einem der Ansprüche 1 bis 3, **dadurch gekennzeichnet, dass** die Bestimmung des Pegels im Wasserschloss durch Messung erfolgt.

4. Verfahren nach Anspruch 1, **dadurch gekennzeichnet, dass** ein Minimalpegel und/oder ein Maximalpegel festgelegt wird, um ein Leerlaufen bzw. Überlaufen des Wasserschlosses zu verhindern.

5. Verfahren nach einem der vorangehenden Ansprüche, **dadurch gekennzeichnet, dass** ein minimaler oder maximaler Pegel eingehalten wird, damit im Falle einer Abschaltung beim darauffolgenden Zurückschwingen des Pegels im Wasserschloss ein maximaler oder minimaler Pegelgrenzwert nicht überschritten wird.

6. Verfahren nach einem der vorangehenden Ansprüche, **dadurch gekennzeichnet, dass** die Grenzkurve in Abhängigkeit der Last ermittelt wird.

7. Verfahren nach einem der vorangehenden Ansprüche, **dadurch gekennzeichnet, dass** ein oder mehrere Parameter in die Ermittlung der Grenzkurve einbezogen werden.

8. Verfahren nach Anspruch 7, **dadurch gekennzeichnet, dass** Parameter ausgewählt aus der Gruppe Pegel im Stausee, Gesamtdurchfluss der Turbinen, Pegel im Differentialwasserschloss in die Ermittlung der Grenzkurve einbezogen werden, so dass diese zu einer Grenzbedingung höherer Dimension wird.

9. Verfahren nach einem der vorangehenden Ansprüche, **dadurch gekennzeichnet, dass** der gesamte Durchfluss durch die Turbinen bestimmt wird.

10. Verfahren nach einem der vorangehenden Ansprüche, **dadurch gekennzeichnet, dass** die Bestimmung von Parametern und/oder des Zustands in der Phasenebene durch einen Beobachter im Sinn der Regelungstechnik erfolgt.

11. Verfahren nach einem der vorangehenden Ansprüche, **dadurch gekennzeichnet, dass** eine zweite Grenzkurve ermittelt wird, die parallel zur ersten Grenzkurve verläuft, um eine Laständerung im Sinne einer Hysterese zu steuern.

12. Verfahren nach einem der vorangehenden Ansprüche, **dadurch gekennzeichnet, dass** an Stelle der Blockierung der Lasterhöhung eine allmähliche Verminderung der erlaubten Geschwindigkeit der Lasterhöhung verwendet wird, welche durch die Lage des Zustands in der Phasenebene gesteuert wird.

13. Verfahren nach einem der vorangehenden Ansprüche, **dadurch gekennzeichnet, dass** die erlaubte Geschwindigkeit der Lasterhöhung bei Ausfall der Information über den Pegel selbsttätig auf ein in jeder Situation ungefährliches Mass beschränkt wird.

## Claims

1. Method of controlling load manoeuvres in a hydroelectric power station with a surge tank on the high-pressure and/or low-pressure side, **characterized in that** a level in the surge tank is determined, that on the basis of the variation of this level over time the state magnitudes actual level (z) and net inflow (ΔQ) are determined for the surge tank and compared in a phase plane with a limit curve, which corresponds to the state variation at constant load and runs approximately through the point of the maximum or minimum permitted level, and that when the limit curve is reached, the load increase is interrupted.

2. Method according to Claim 1, **characterized in that** the actual state is monitored at time intervals.

3. Method according to one of Claims 1 to 3, **characterized in that** the level in the surge tank is determined by measurement.

4. Method according to Claim 1, **characterized in that** a minimum and/or maximum level is defined, to prevent the surge tank running empty or overflowing.

5. Method according to one of the preceding claims, **characterized in that** a minimum or maximum level is conformed to, so that in the case of a power-down, when the level in the surge tank subsequently oscillates back, a maximum or minimum level limit is not exceeded.

6. Method according to one of the preceding claims, **characterized in that** the limit curve is determined depending on the load.

7. Method according to one of the preceding claims, **characterized in that** one or more parameters are used to determine the limit curve.

8. Method according to Claim 7, **characterized in that** parameters selected from the group level in artificial lake, total through flow of turbines, level in differential surge tank are used to determine the limit curve, so that this becomes a higher-dimension limit condition.

9. Method according to one of the preceding claims, **characterized in that** the total flow through the turbines is determined.

10. Method according to one of the preceding claims, **characterized in that** parameters and/or the state in the phase plane are determined by an observer in the control engineering sense.

11. Method according to one of the preceding claims, **characterized in that** a second limit curve which runs parallel to the first limit curve is determined, to control a load change as a hysteresis.

12. Method according to one of the preceding claims, **characterized in that** instead of blocking the load increase, a gradual reduction of the permitted speed of the load increase is used, this being controlled by the position of the state in the phase plane.

13. Method according to one of the preceding claims, **characterized in that** if the information about the level fails, the permitted speed of the load increase is automatically restricted to a value which is not dangeorous in any situation.

## Revendications

1. Procédé de réglage d'une centrale hydroélectrique avec un réservoir d'expansion, situé côté haute pression et/ou côté basse pression, pendant des changements de charge, **caractérisé en ce qu'**un niveau est déterminé pour le réservoir d'expansion, **en ce que**, à l'aide de l'allure temporelle de ce niveau, on détermine les grandeurs d'états que sont le niveau réel (z) et l'afflux net (ΔQ) pour le réservoir d'expansion et, dans un plan de phase, est effectuée une comparaison à une courbe limite, correspondant à l'allure de l'état pour une charge maintenue fixe et passant à peu près par le point du niveau maximal ou minimal admissible, et **en ce que** l'augmentation de la charge est interrompue, lors de l'atteinte de la courbe limite.

2. Procédé selon la revendication 1, **caractérisé en ce que** l'état réel est surveillé à certains intervalles de temps.

3. Procédé selon l'une des revendications 1 à 2, **caractérisé en ce que** la détermination du niveau dans le réservoir d'expansion se fait par une mesure.

4. Procédé selon la revendication 1, **caractérisé en ce qu'**un niveau minimal et/ou un niveau maximal est/sont fixé(s), pour empêcher tout fonctionnement à vide, respectivement tout débordement, du réservoir d'expansion.

5. Procédé selon l'une des revendications précédentes, **caractérisé en ce qu'**un niveau minimal ou maximal est respecté, afin que, en cas de mise hors service, lors des reculs subséquents du niveau dans le réservoir d'expansion, aucune valeur limite maximale ou minimale de niveau ne soit dépassée.

6. Procédé selon l'une des revendications précédentes, **caractérisé en ce que** la courbe limite est déterminée en fonction de la charge.

7. Procédé selon l'une des revendications précédentes, **caractérisé en ce qu'**un ou plusieurs paramètres sont impliqués dans la détermination de la courbe limite.

8. Procédé selon la revendication 7, **caractérisé en ce que** des paramètres, sélectionnés dans le groupe du niveau dans le lac de retenue, le débit global des turbines, le niveau dans le réservoir d'expansion différentiel, sont impliqués dans la détermination de la courbe limite, de manière que ceux-ci deviennent une condition aux limites de dimension supérieure.

9. Procédé selon l'une des revendications précédentes, **caractérisé en ce que** le débit global à travers les turbines est déterminé.

10. Procédé selon l'une des revendications précédentes, **caractérisé en ce que** la détermination de paramètres et/ou de l'état dans le plan de phase est observée par un observateur, dans le sens de la technique de régulation.

11. Procédé selon l'une des revendications précédentes, **caractérisé en ce qu'**est déterminée une deuxième courbe limite, s'étendant parallèlement à la première courbe limite, afin de commander une variation de charge dans le sens d'une hystérésis.

12. Procédé selon l'une des revendications précédentes, **caractérisé en ce que**, au lieu du blocage de l'augmentation de charge, on utilise une diminution progressive de la vitesse autorisée de l'augmentation de charge, commandée par la position de l'état dans le plan de phase.

13. Procédé selon l'une des revendications précédentes, **caractérisé en ce que** la vitesse autorisée de l'augmentation de charge, en cas de défaillance de l'information au sujet du niveau, est automatiquement limitée à une indication quantitative ne présentant aucun risque dans aucune situation.
